(19) Europäisches Patentamt
European Patent Office
Office européen des brevets

(11) **EP 3 241 791 B1**

(12) **EUROPÄISCHE PATENTSCHRIFT**

(45) Veröffentlichungstag und Bekanntmachung des Hinweises auf die Patenterteilung:
**05.06.2019  Patentblatt 2019/23**

(51) Int Cl.:
*B65H 31/32* *(2006.01)*    *B65H 31/10* *(2006.01)*
*B65G 57/24* *(2006.01)*    *B65G 61/00* *(2006.01)*

(21) Anmeldenummer: **17020147.9**

(22) Anmeldetag: **11.04.2017**

(54) **VERFAHREN ZUR HERSTELLUNG VON STAPELN AUS BÖGEN**

METHOD FOR THE PRODUCTION OF STACKS OUT OF SHEETS

PROCÉDÉ DE FABRICATION D'EMPILEMENTS DE FEUILLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2016  DE 102016106619**

(43) Veröffentlichungstag der Anmeldung:
**08.11.2017  Patentblatt 2017/45**

(73) Patentinhaber: **BW Papersystems Stuttgart GmbH 72622 Nürtingen (DE)**

(72) Erfinder: **Klein, Hansjörg 73773 Aichwald (DE)**

(74) Vertreter: **Von Rohr Patentanwälte Partnerschaft mbB
Rüttenscheider Straße 62
45130 Essen (DE)**

(56) Entgegenhaltungen:
**EP-A1- 1 870 361        DE-A1-102011 100 968
DE-A1-102014 214 237     DE-U1- 20 105 686**

**Beschreibung**

Die Erfindung betrifft ein Verfahren zur Herstellung von Stapeln aus Bögen, gemäß den Merkmalen des Oberbegriffes des unabhängigen Patentanspruchs 1.

Die Erfindung betrifft folglich Verfahren zum Stapeln von Bögen, insbesondere von geschuppt zugeförderten Papier- oder Kartonbögen auf Paletten, mit einem mit Hilfe einer Hubeinrichtung bewegbaren Stapelaufnahmetisch und einer Stapelwechselvorrichtung zur Unterteilung der zugeförderten Bögen in Stapel.

Bei der gattungsgemäßen Herstellung von Großstapeln aus großformatigen Bögen, beispielsweise DIN-Format B1 oder B2, ist zur Überbrückung des vertikalen Abstands zwischen der Zuförderebene der Bögen und der Flurebene die Ablageplattform als ein vertikal auf- und abfahrbarer Stapelaufnahmetisch ausgeführt. Auf dem Stapelaufnahmetisch wird eine Palette platziert, auf welcher die Bögen zu Stapeln abgelegt werden. Der Aufnahmetisch wird mit Hilfe einer Hubeinrichtung in die obere Endposition gefahren und die Bögen werden der Palette kontinuierlich zugeführt.

Während der kontinuierlichen Zuführung wird der Stapelaufnahmetisch mit der Palette kontinuierlich abgesenkt, um eine gleichmäßige Stapelbildung zu gewährleisten. Ist die gewünschte Stapelhöhe erreicht, fährt die Stapelwechselvorrichtung, beispielsweise ausgebildet als horizontal bewegbarer Einschubboden, zwischen zwei Bögen und trennt diese vollständig voneinander. Der Untere dieser zwei Bögen bildet somit den obersten Bogen des auf der Palette abgestapelten Stapels, der obere der zwei getrennten Bögen ist der erste Bogen des nachfolgenden Stapels. Der nachfolgende Stapel wird auf der Oberseite des Einschubbodens gebildet. Um eine gleichmäßige Stapelbildung zu gewährleisten, wird auch der Einschubboden kontinuierlich abgesenkt. Währenddessen fährt der Aufnahmetisch in seine untere Endposition auf Höhe des Flurbereichs und die Palette mit dem gebildeten Stapel wird wegtransportiert. Anschließend wird der Stapelaufnahmetisch mit einer neuen, leeren Palette auf die Höhe der Stapelwechselvorrichtung bewegt. Die Stapelwechselvorrichtung fährt horizontal wieder in ihre Ausgangsposition zurück und lädt dadurch den sich bildenden Stapel auf die leere Palette ab. Die Palette bzw. der Stapelaufnahmetisch wird erneut kontinuierlich abgesenkt, bis die gewünschte Stapelhöhe erreicht ist und die Stapelwechselvorrichtung wieder zwischen zwei Bögen fährt, um die Stapel zu separieren.

Eine gattungsgemäße Vorrichtung sowie ein gattungsgemäßes Verfahren sind aus den nachfolgenden Schriften bekannt.

Die DE 30 28 865 A1 offenbart eine Zwischenstapeleinrichtung für Non-Stop-Stapelwechsel in Auslegern von Druckmaschinen mit einer auf- und absteuerbaren Hilfsstapeleinrichtung, wobei die Hilfsstapeleinrichtung aus einem bekannten über Träger gespannten und in Führungsschienen reversierbar antreibbaren Rollotuch besteht, wobei an den Führungsschienen klappbar befestigte Winkelschienen angeordnet sind, in welche die zur Bildung einzelner Bogenstapel kleiner Höhe erforderlichen Zwischenstapelbretter einschiebbar sind. Die DE 10 2014 214 237 A1 offenbart ein Verfahren zur Herstellung von Großstapeln aus großformatigen Bögen, wobei zur Überbrückung eines vertikalen Abstands zwischen einer Zuförderebene der Bögen und einer Flurebene eine Ablageplattform als ein vertikal auf- und abfahrbarer Stapelaufnahmetisch ausgeführt ist, wobei auf dem Stapelaufnahmetisch eine Palette platziert wird, auf welcher die Bögen zu Stapeln abgelegt werden, wobei der Aufnahmetisch mit Hilfe einer Hubeinrichtung in eine obere Endposition gefahren wird und die Bögen der Palette kontinuierlich zugeführt werden, wobei während der kontinuierlichen Zuführung der Stapelaufnahmetisch mit der Palette kontinuierlich abgesenkt wird, um eine gleichmäßige Stapelbildung zu gewährleisten, wobei dann, wenn die gewünschte Stapelhöhe erreicht ist, die Stapelwechselvorrichtung zwischen zwei Bögen fährt und diese vollständig voneinander trennt, wobei der nachfolgende Stapel auf der Oberseite des Einschubbodens gebildet wird, wobei der Einschubboden kontinuierlich abgesenkt wird, während der Aufnahmetisch in seine untere Endposition auf Höhe des Flurbereichs fährt und die Palette mit dem gebildeten Stapel wegtransportiert wird, wobei anschließend der Stapelaufnahmetisch mit einer neuen, leeren Palette auf die Höhe der Stapelwechselvorrichtung bewegt wird und die Stapelwechselvorrichtung horizontal wieder in ihre Ausgangsposition zurück fährt und dadurch den sich bildenden Stapel auf die leere Palette ab lädt, wobei danach die Palette bzw. der Stapelaufnahmetisch erneut kontinuierlich abgesenkt wird, bis die gewünschte Stapelhöhe erreicht ist und die Stapelwechselvorrichtung wieder zwischen zwei Bögen fährt, um die Stapel zu separieren, wobei eine Adapterpalette einmalig zu Beginn der kontinuierlichen Stapelbildung eingesetzt wird. Der Einsatz einer Adapterpalette ist aufwendig, da sie zu Produktionsbeginn jeweils manuell, beispielsweise mit einem Flurförderfahrzeug, in der Anlage positioniert werden muss. Dieser Vorgang könnte auch automatisiert werden, was aber aufwendig und damit ineffizient ist.

Die EP 1 870 361 A1 offenbart ein Verfahren und eine Vorrichtung zur Bildung von Stapeln von Flachteilen, insbesondere Bogen, wie beispielsweise Papierbogen, mit einem Hilfsstapelträger, auf dem ein Hilfsstapel gebildet werden kann. Bei der Übergabe des gebildeten Teilstapels vom Hilfsstapelträger auf den Hauptstapelträger wird der Hauptstapelträger im Wesentlichen entgegengesetzt zu der Rückziehbewegung des Hilfsstapelträgers bewegt.

Zu Beginn des kontinuierlichen Stapelvorgangs der vorstehend beschriebenen Art ergibt sich das Problem, dass der Stapelaufnahmetisch nicht bis auf die Höhe der Zuförderebene vertikal verfahren werden kann. Aus konstruktiven Gründen überragt der Zuförderer einen Teil des Aufnahmetisches. Dies ist insbesondere der Fall, wenn die Bögen quer und horizontal zur Förderrichtung gesehen mittig auf der Palette gestapelt werden sollen. Dazu muss sich ein Teil der Palette unterhalb des Zuförderers befinden, die Palette kann daher nicht bis auf Höhe der Zuförderebene verfahren werden.

Bei der Bildung des ersten Stapels einer Produktionscharge (bestehend aus einer Vielzahl von Stapeln) kann die Palettenebene somit nicht wie erforderlich auf Höhe der Zuförderebene liegen, sondern darunter. Ein Hinabfallen der vorzugsweise geschuppt zugeförderten Bögen auf die Palette würde eine gleichmäßige Stapelung des ersten Stapels der Produktion verhindern. Die Bögen würden umknicken, sich verkanten und/oder gegeneinander verdrehen. Es entsteht Ausschuss.

Der Erfindung liegt daher die Aufgabe zugrunde, ein Verfahren anzugeben, das die eingangs geschilderten Nachteile behebt.

Diese Aufgabe wird durch ein Verfahren mit den Merkmalen des unabhängigen Patentanspruchs 1 gelöst.

Erfindungsgemäß wird bei der Erfindung zur Herstellung von Stapeln aus Bögen vorgesehen, dass zur Überbrückung eines vertikalen Abstands zwischen einer Zuförderebene der Bögen und einer Flurebene eine Ablageplattform als ein vertikal auf- und abfahrbarer Stapelaufnahmetisch ausgeführt ist, wobei auf dem Stapelaufnahmetisch eine Palette platziert wird, auf welcher die Bögen zu Stapeln abgelegt werden, wobei der Aufnahmetisch mit Hilfe einer Hubeinrichtung in eine obere Endposition gefahren wird und die Bögen der Palette kontinuierlich zugeführt werden, wobei während der kontinuierlichen Zuführung der Stapelaufnahmetisch mit der Palette kontinuierlich abgesenkt wird, um eine gleichmäßige Stapelbildung zu gewährleisten, wobei dann, wenn die gewünschte Stapelhöhe erreicht ist, die Stapelwechselvorrichtung zwischen zwei Bögen fährt und diese vollständig voneinander trennt, wobei der nachfolgende Stapel auf der Oberseite eines Schiebers gebildet wird, wobei der Schieber kontinuierlich abgesenkt wird, während der Aufnahmetisch in seine untere Endposition auf Höhe des Flurbereichs fährt und die Palette mit dem gebildeten Stapel wegtransportiert wird, wobei anschließend der Stapelaufnahmetisch mit einer neuen, leeren Palette auf die Höhe der Stapelwechselvorrichtung bewegt wird und der Schieber der Stapelwechselvorrichtung horizontal wieder in seine Ausgangsposition zurück fährt und dadurch den sich bildenden Stapel auf die leere Palette ablädt, wobei danach die Palette bzw. der Stapelaufnahmetisch erneut kontinuierlich abgesenkt wird, bis die gewünschte Stapelhöhe erreicht ist und der Schieber der Stapelwechselvorrichtung wieder zwischen zwei Bögen fährt, um die Stapel zu separieren, wobei eine Palettenzentriervorrichtung mindestens zu Beginn der Übergabe des Stapels auf die Palette eingesetzt wird, d.h. vor der Übergabe oder zum Zeitpunkt der Übergabe. Die Palettenzentriervorrichtung ermöglichtes, die Palette unterhalb eines Stapels vor der erneuten Ablage des gebildeten Stapels auf der Palette zu zentrieren oder nach anderen Maßvorgaben im Verhältnis zum Stapel zu verschieben. Hierdurch kann ohne weitere Hilfsvorrichtungen ein Stapel beliebig auf einer Palette positioniert werden. Die Stapelwechselvorrichtung wird wie beim Stand der Technik zum eigentlichen Trennen von zwei Bögen eingesetzt. Um aber die Palette zum Stapel zentrieren bzw. positionieren zu können, wird vor der Ablage des gebildeten Stapels von der Stapelwechselvorrichtung auf die Palette diese durch eine Bewegung relativ zum Stapel verschoben und der Stapel dann von der Stapelwechselvorrichtung auf der Palette abgelegt, wenn die Palette eine bestimmte Position relativ zum Stapel erreicht hat.

Weiterhin ist erfindungsgemäß vorzugsweise vorgesehen, dass die Palettenzentriervorrichtung ein Ausrichtungssystem umfasst. Durch das Ausrichtungssystem ist es möglich feste Maße für die Positionierung des Stapels auf der Palette vorzugeben.

Weiterhin ist erfindungsgemäß vorzugsweise vorgesehen, dass das Ausrichtungssystem mindestens einen Anschlag aufweist. Durch Anschläge können definierte Positionen manuell oder maschinell mit der zu positionierenden Palette angesteuert werden. Die Ablage des Stapels erfolgt, solange die Position der Anschläge nicht verändert wird, definiert an der gleichen Position auf der jeweiligen Palette.

Weiterhin ist erfindungsgemäß vorzugsweise vorgesehen, dass der mindestens eine Anschlag in der Fläche zur Aufnahme der Palette versenkbar ist. Hierdurch wird eine glatte Fläche gebildet, auf der die Palette bei Bedarf beliebig verrückt werden kann.

Weiterhin ist erfindungsgemäß vorzugsweise vorgesehen, dass der mindestens eine Anschlag nur an der schmalen Seite der Palette bzw. Systempalette, abhängig vom erzeugten Bogenformat, zur Anlage kommt. Der Anschlag ist nur erforderlich, wenn Bögen auf der Palette abgelegt werden sollen, deren längste Kante ein größeres Maß als die schmale Seite einer eingesetzten Palette aufweist. Weiterhin ist erfindungsgemäß vorgesehen, dass die Palettenzentriervorrichtung in den Rahmen der Stapelwechselvorrichtung integriert ist. Hierdurch ist es möglich, die Palettenzentriervorrichtung auch nachträglich in vorhandene Anlagen zu integrieren.

Weiterhin ist erfindungsgemäß vorzugsweise vorgesehen, dass die Palettenzentriervorrichtung eine Palettenspannvorrichtung zur Positionierung der Palette bzw. Systempalette unter dem jeweiligen Stapel aufweist. Die Palettenspannvorrichtung ermöglicht, die jeweilige Palette definiert zu bewegen. Sie erfasst die jeweilige Palette rückt sie in die vorgesehene Position und gibt sie danach wieder frei.

Bei einem Verfahren zur Herstellung von Stapeln aus Bögen, wobei zur Überbrückung eines vertikalen Abstands zwischen einer Zuförderebene der Bögen und einer Flurebene eine Ablageplattform als ein vertikal auf- und abfahrbarer Stapelaufnahmetisch ausgeführt ist, wobei auf dem Stapelaufnahmetisch eine Palette platziert wird, auf welcher die Bögen zu Stapeln abgelegt werden, wobei der Aufnahmetisch mit Hilfe einer Hubeinrichtung in eine obere Endposition gefahren wird und die Bögen der Palette kontinuierlich zugeführt werden, wobei während der kontinuierlichen Zuführung der Stapelaufnahmetisch mit der Palette kontinuierlich abgesenkt wird, um eine gleichmäßige Stapelbildung zu gewährleisten, und wobei ein Deckblatt einmalig vor oder zu Beginn der kontinuierlichen Stapelbildung auf der Palette abgelegt wird, kann vorgesehen sein, dass, wenn die gewünschte Stapelhöhe erreicht ist, die Stapelwechselvorrichtung zwischen zwei Bögen fährt und diese vollständig voneinander trennt, wobei der nachfolgende Stapel auf der Oberseite eines Schiebers gebildet wird, wobei der Schieber kontinuierlich abgesenkt wird, während der Aufnahmetisch in seine untere Endposition auf Höhe des Flurbereichs fährt und die Palette mit dem gebildeten Stapel wegtransportiert wird, wobei anschließend der Stapelaufnahmetisch mit einer neuen, leeren Palette auf die Höhe der Stapelwechselvorrichtung bewegt wird und der Schieber der Stapelwechselvorrichtung horizontal wieder in seine Ausgangsposition zurück fährt und dadurch den sich bildenden Stapel auf die leere Palette ablädt, wobei danach die Palette bzw. der Stapelaufnahmetisch erneut kontinuierlich abgesenkt wird, bis die gewünschte Stapelhöhe erreicht ist und der Schieber der Stapelwechselvorrichtung wieder zwischen zwei Bögen fährt, um die Stapel zu separieren.

Dies ermöglicht die Separierung des untersten Bogens von der Palette, wobei der Papierstapel von der Palette getrennt wird und somit ein Verschieben/Umpositionieren der Palette unabhängig vom Stapel erfolgen kann.

Durch die Nutzung eines Deckblattes als erste Lage nach dem Anfahren der Anlage wird verhindert, dass Bögen aus der Produktion beim Kontakt mit der rauen Oberfläche einer Palette bzw. Systempalette beschädigt oder sogar zerstört werden. Systempaletten weisen schmale Spalten auf, in die Bögen gelangen können und ihr Fluss somit gestoppt wird. Nachfolgende Bögen würden die nicht korrekt positionierten Bögen dann womöglich komprimieren.

Weiterhin ist vorzugsweise vorgesehen, dass das Deckblatt während des Stapelprozesses beispielsweise auf einer Stanzmaschine oder einer anderen nachgeordneten Verarbeitungsmaschine entnommen wird. Somit ist kein separater Arbeitsschritt zur Entnahme des Deckblattes erforderlich. Das Deckblatt kann erneut eingesetzt werden. Grundsätzlich ist es auch möglich, dass das Deckblatt mit Hilfe einer Trennvorrichtung vom Stapel getrennt wird, wobei die Trennvorrichtung zwischen Stapel und Deckblatt einfährt. Dann kann die Palette mit Deckblatt abgesenkt und es kann das Deckblatt entnommen werden.

Weiterhin ist vorgesehen, dass ein Saugband zur Zuführung des Deckblatts zur Palette oder Systempalette dient. Durch das Saugband kann das Deckblatt direkt über der jeweiligen Palette freigegeben werden und die Oberfläche der Palette bedecken. Die Gefahr, der Beschädigung des Deckblattes bei der Förderung quer zur Palette ist somit nicht mehr gegeben.

Weiterhin ist vorgesehen, dass das Deckblatt vom Querschneider hergestellt wird. Somit wird das Deckblatt im Anfahrprozess innerhalb der Anlage hergestellt, es sind keine weiteren Vorrichtung zur Herstellung des Deckblattes erforderlich.

Es kann vorgesehen sein, dass der Stapelaufnahmetisch mehrteilig, wenigstens zweiteilig ausgeführt ist und/oder in seiner Größe veränderlich ist. Vorzugsweise weist der Stapelaufnahmetisch in jeder einstellbaren Größe zumindest eine Grundfläche auf, die der Grundfläche der Palette entspricht. Damit lässt sich die Palette in jeder einstellbaren Größe des Stapelaufnahmetisches vorzugsweise vollflächig auf den Stapelaufnahmetisch auflegen. Die Größenänderung kann vorzugsweise durch einen Klapp- und/oder Schiebemechanismus und/oder ein anderes Wirkungsprinzip erzielt werden. Bei dieser Ausführungsform lässt sich die Größe des Stapelaufnahmetisches verändern, um den Stapelaufnahmetisch bis auf die Höhe der Zuförderebene vertikal verfahren zu können. Alternativ oder ergänzend zu einer wenigstens zweiteiligen Ausführung des Stapelaufnahmetischs, die durch Klappen und/oder Verschieben von wenigstens zwei Teilflächen des Stapelaufnahmetischs relativ zueinander eine Größenanpassung ermöglicht, kann vorgesehen sein, dass der Stapelaufnahmetisch rückziehbar ausgeführt ist. Dies ermöglicht insbesondere eine effiziente Bogenherstellung für unterschiedliche Formatkombinationen und erlaubt eine wirtschaftliche Nach- bzw. Weiterverarbeitung der Bögen mit aus dem Stand der Technik bekannten Nachverarbeitungsverfahren.

Der Stapelaufnahmetisch kann erfindungsgemäß wenigstens zweiteilig ausgeführt sein, wobei wenigstens zwei Teile des Stapelaufnahmetisches in vertikaler Richtung unabhängig voneinander verfahren werden können, wobei die gemeinsame Trennebene der Teile des Stapelaufnahmetisches identisch ist mit der vertikalen Begrenzungsfläche des Anschlags, an dem die Palette wenigstens zu Beginn der Stapelbildung ausgerichtet wird. Der zur Ablage der Palette vorgesehene Teil des Stapelaufnahmetisches weist dann weiter vorzugsweise eine Grundfläche auf, die zumindest der Grundfläche der Palette entspricht. Der wenigstens eine weitere Teil des Stapelaufnahmetisches kann eine andere Größe aufweisen. Der wenigstens eine weitere Teil des Stapelaufnahmetisches dient dazu, die Palette mindestens zu Beginn der Übergabe des Stapels auf die Palette zu zentrieren.

Bögen der Größe DIN B1 weisen ein Maß von 707 x 1000 mm auf. Bögen der Größe DIN B2 weisen ein Maß von 500 x 707 mm auf. Diese Bögen sollen jeweils auf einem Ladungsträger Abmessungen 1.200 x 800 x 144 mm (Länge x Breite x Höhe) abgelegt bzw. gestapelt werden. Ladungsträger mit diesen Maßen werden als Europoolpalette (umgangssprachlich: Europalette) bezeichnet. Sie ist eine Flachpalette aus dem Tauschsystem des Europools. Genormt ist die Europoolpalette durch die EN 13698-1 und ist eine mehrwegfähige Transportpalette mit einer Grundfläche von 0,96 m$^2$ und den Maßen 1200 x 800 x 144 mm (Länge x Breite x Höhe) sowie einer Masse von 20 bis 24 kg (je nach Holzfeuchte). Sie wird von bis zu 81 Spezialnägeln zusammengehalten, bevorzugt jedoch von 78 Spezialnägeln. Die Europalette ist UIC-genormt (UIC - Vereinigung der Internationalen Eisenbahnen, französisch: Union Internationale des chemins de fer) und entspricht den Bestimmungen der European Pallet Association e. V. (EPAL).

Die Palette hat definierte Fasen an den senkrechten Außenkanten und an den Kanten der Bretter der Breitseite. Die einen erleichtern das Rangieren in engen Laderäumen, die anderen das Einfädeln mit Gabelzinken oder Hineinrollen mit einem Hubwagen. Alle schonen das Holz in Bezug auf Absplittern. Eine Europalette ist eine sogenannte Vierwegpalette, das heißt, sie kann von allen vier Seiten mit einem automatischen Flurfördergerät, z. B. mit einem Gabelstapler oder einem Hubwagen, aufgenommen und befördert werden.

Das Maß der abzulegenden DIN B1-Bögen bzw. DIN B2-Bögen entspricht somit nicht der Ablagefläche bzw. Ladefläche des Ladungsträgers. Daher werden erfindungsgemäß Maßnahmen vorgeschlagen, um Bögen der vorgenannten Maße sicher, schnell und ohne Beschädigung auf dem Ladungsträger abzulegen und somit versandfertig bereitzustellen.

Das zuvor beschriebene Verfahren kann beispielsweise vorteilhaft bei Anlagen eingesetzt werden, die eine Bahnbreite von ca. 720 mm aufweisen. Bögen mit einem B1-Format können als "Schmalbahnen" produziert werden mit einer Bogenlänge von 1050 mm in Maschinenlaufrichtung. Bögen mit einem B2-Format können in "Breitbahnen" produziert werden mit einer Bogenlänge von 525 mm. Da die Drucktechnik für die Arbeitsbreite von 720 mm deutlich günstiger ist als für 1050 mm, unterstützt das erfindungsgemäßen Verfahren eine effiziente Bogenherstellung und kann vorteilhaft mit aus dem Stand der Technik bekannten Nachverarbeitungsverfahren kombiniert werden, bei hoher Wirtschaftlichkeit des Gesamtprozesses. Dies gilt selbstverständlich auch für andere Formatkombinationen.

Weitere vorteilhafte Verfahrensschritte sind in den Unteransprüchen angegeben und im folgenden anhand der Figuren, die den Verfahrensablauf zeigen, näher erläutert.

Fig. 1A bis 1J      zeigen den Palettiervorgang für das Format B1,
Fig. 2A bis 2D      zeigen Varianten beim Palettiervorgang für die Formate B1 und B2,
Fig. 3      zeigt eine weitere Variante der Palettierung des Formats B1,
Fig. 4A bis 4E      zeigen den Palettiervorgang für das Format B2,
Fig. 5A u. 5B      zeigen zwei Ansichten bei der Palettierung des Formats B1,
Fig. 6A u. 6B      zeigen die Palettierung der Formate B1 (Fig. 4B) und B2 (Fig. 4A),
Fig. 7A bis 7D      zeigen die Palettierung der Formate B1 (Fig. 7C u. 7D) und B2 (Fig. 7A u. 7B),
Fig. 8A bis 8C      zeigen die Palettierung des Formats B1 und
Fig. 9A bis 9C      zeigen eine weitere Variante der Palettierung des Formats B1.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Vorrichtung und anderer Elemente. Diese Begriffe sind nicht einschränkend zu verstehen, das heißt durch verschiedene Positionen und/oder spiegelsymmetrische Auslegung oder dergleichen können sich diese Bezüge ändern. Gleiche Elemente erhalten in den Figuren jeweils die gleichen Bezugszeichen, unabhängig von dem dargestellten Ausführungsbeispiel.

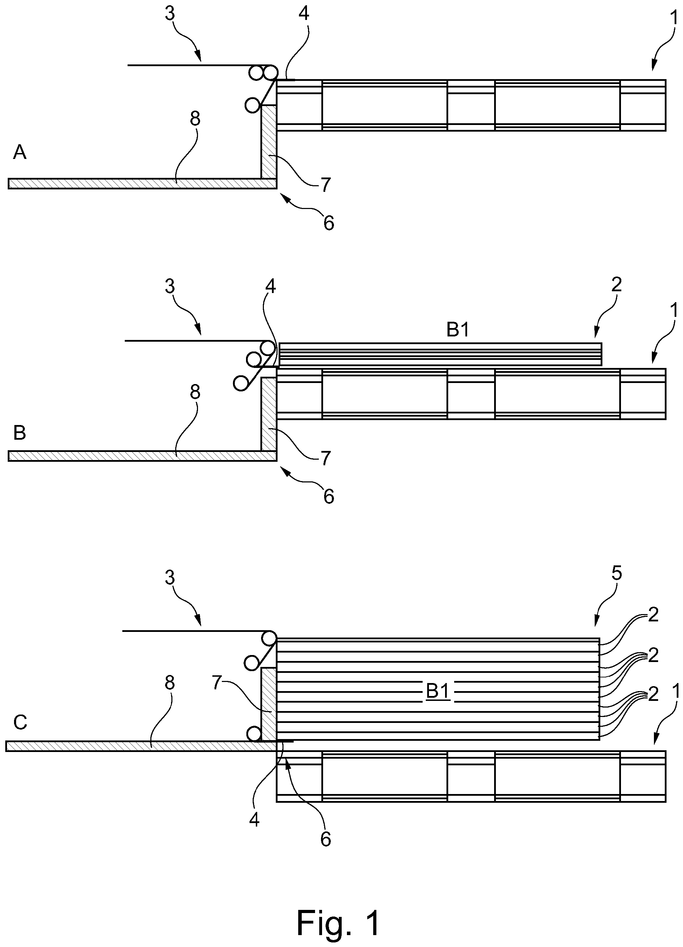

Die Figuren 1A bis 1J zeigen die Palettierung von Bögen im B1 Format sowie den Palettenwechsel. In den Figuren 1A bis 1J ist eine Palette 1 gezeigt auf die Bögen 2 gestapelt werden. Durch eine Fördervorrichtung 3 werden die Bögen 2 zu der Palette 1 transportiert. An der Palette 1 ist eine Trennvorrichtung 4 angeordnet, um Stapel 5 und Bögen 2 voneinander zu separieren. Zur Bildung der Stapel 5 ist eine Stapelwechselvorrichtung 6 vorgesehen. Diese Stapelwechselvorrichtung 6 weist einen Anschlag 7 zur Bildung der Stapel 5 aus den Bögen 2 auf. Weiterhin verfügt die Stapelwechselvorrichtung 6 über einen verfahrbaren Schieber 8, welcher nach Ausbildung eines Stapels 5 zwischen den Stapel 5 und die Palette 1, zwischen zwei Stapel 5 oder zwischen einen Stapel 5 und einen Bogen 2 bewegt werden kann. Auch ist der Schieber 8 zwischen zwei Bögen 2 bewegbar, ohne dass bereits ein Stapel 5 ausgebildet ist. Der Ablauf stellt sich wie folgt dar:

Figur 1A:      Eine leere Palette 1 wird mit Hilfe des hier nicht dargestellten Stapelaufnahmetisch 13 angehoben, bis sie an einem feststehenden Rand ausgerichtet ist. Eine Trennvorrichtung 4 wird oben auf die leere Palette 1 bewegt.

Fig. 1B:      Die Produktion beginnt, Bögen 2 werden zum Stapel 5 gefördert. Bögen 2 bilden den Stapel 5 auf der Palette 1. An einem feststehenden Anschlag werden die Bögen 2 durch die Trennvorrichtung 4 getrennt. Die Bögen 2 werden auf der Trennvorrichtung 4 gesammelt.

Fig. 1C:      Der maximale Weg für die Trennvorrichtung 4 ist erreicht, die Lückenbildung durch die Trennvorrichtung 4 ist beendet. Der Stapel 5 liegt nun vollständig auf der Trennvorrichtung 4.

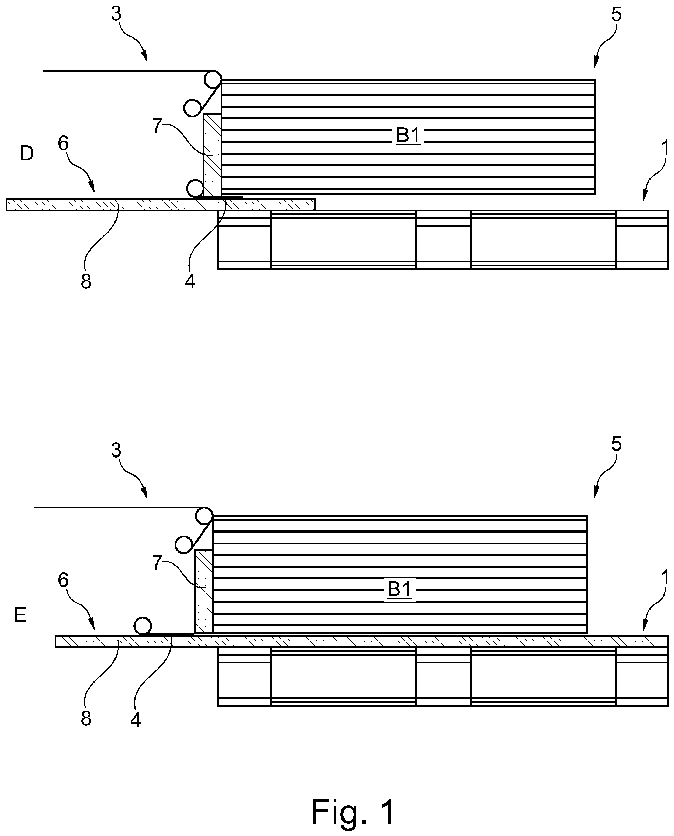

Fig. 1D:      Der Schieber 8 der Stapelwechselvorrichtung 6 wird in den Spalt bewegt und trennt den Stapel 5 von der Palette 1. Der Stapel 5 liegt nun vollständig auf dem Schieber 8 der Stapelwechselvorrichtung 6.

Fig. 1E:      Die Stapelwechselvorrichtung 6 wurde bis zu ihrer maximalen Position (B1 Wechselposition) bewegt. Sie wurde um 1200 mm bewegt, entsprechend der Länge der eingesetzten Palette 1. Die Trennvorrichtung 4 wird von dem Stapel 5 zurückgezogen und bewegt sich in die Warteposition für den nächsten Zyklus. Für diese Bewegung wird etwas mehr Zeit benötigt, im Vergleich zu den folgenden Zyklen.

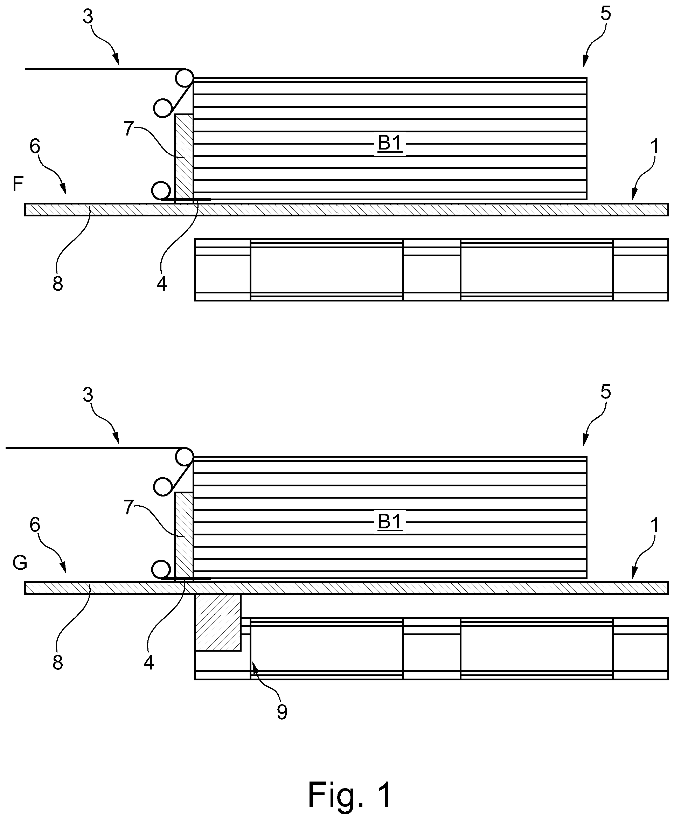

Fig. 1F: Ein Stapelaufnahmetisch 13 wird mit der Palette 1 in eine sichere Position bewegt.

Fig. 1G: Die Palette wird durch eine Palettenspannvorrichtung 9 zwischen dem Rahmen der Stapelwechselvorrichtung 6 eingespannt und wird mit dem Stapelaufnahmetisch 13 unter dem Stapel 5 mittig positioniert. Der Stapel 5 befindet sich weiterhin auf der Stapelwechselvorrichtung 6.

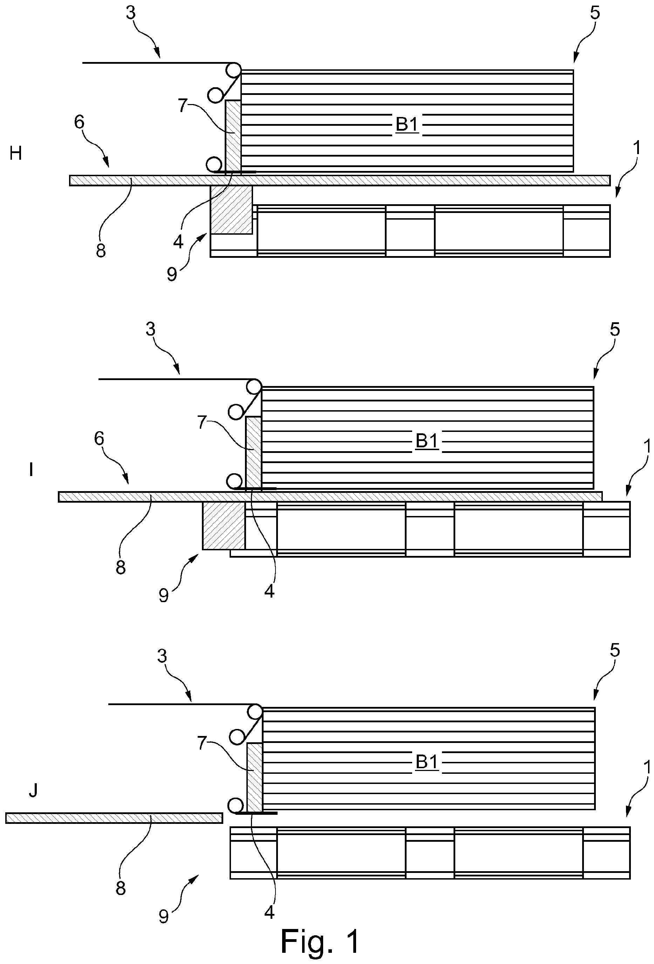

Fig. 1H: Die Palettenspannvorrichtung 9 wird nach der Bewegung freigegeben.

Fig. 1I: Der Stapelaufnahmetisch 13 befördert die Palette 1 bis in die Freigabestellung zwischen Stapel 5 und Palette 1.

Fig. 1J: Die Stapelwechselvorrichtung 6 wird vollständig eingefahren und der Stapel 5 wird auf der Palette 1 zentriert abgesetzt.

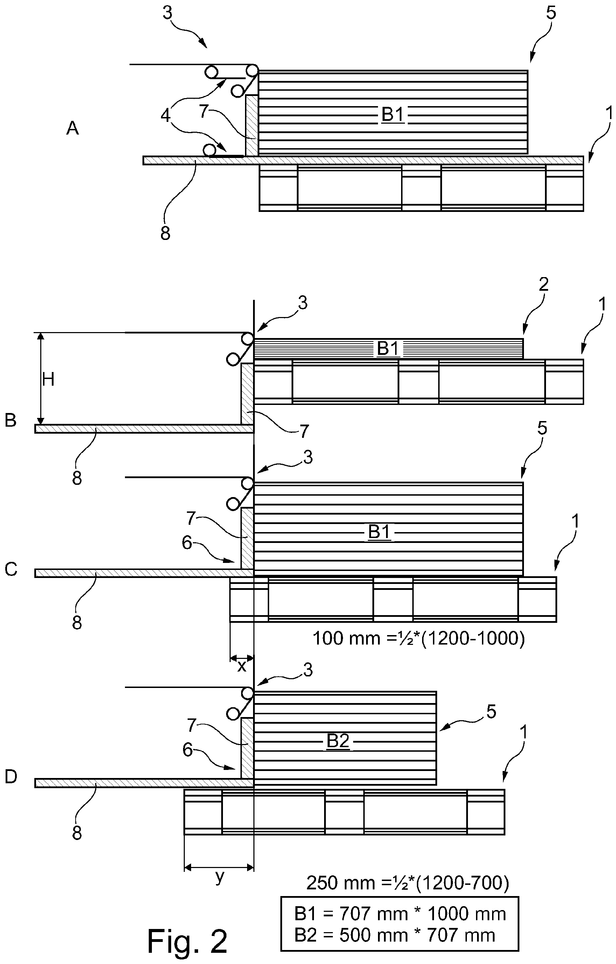

Die Fig. 2A bis 2D zeigen Anforderungen, um die Funktion später zu implementieren. Folgende Voraussetzungen müssen erfüllt sein, um Raum für die Palette 1 unter der Stapelwechselvorrichtung 6 zu erhalten. In der Figur 2B ist mit H die minimale Höhe beim Stapelwechsel gekennzeichnet. Mit X ist in der Figur 2C der minimale Freiraum unter der Stapelwechselvorrichtung 6 gekennzeichnet und mit Y ist in der Figur 2D der maximale Freiraum unter der Stapelwechselvorrichtung 6 gekennzeichnet. Der Freiraum unter der Stapelwechselvorrichtung 6 muss mindestens 100 mm maximal 250 mm betragen, bei einer Bogenlänge von 700 mm. Der Freiraum wird benötigt, um mit Hilfe der Palettenzentriervorrichtung die Palette 1, 100 unter dem jeweils im kontinuierlichen Produktionsprozess neu gebildeten Stapel 5 zu zentrieren. X und Y lassen sich wie folgt berechnen:

$$X = 0,5 * (1200 \text{ mm} - 1000 \text{ mm}) = 100 \text{ mm}$$

$$Y = 0,5 * (1200 \text{ mm} - 700 \text{ mm}) = 250 \text{ mm}$$

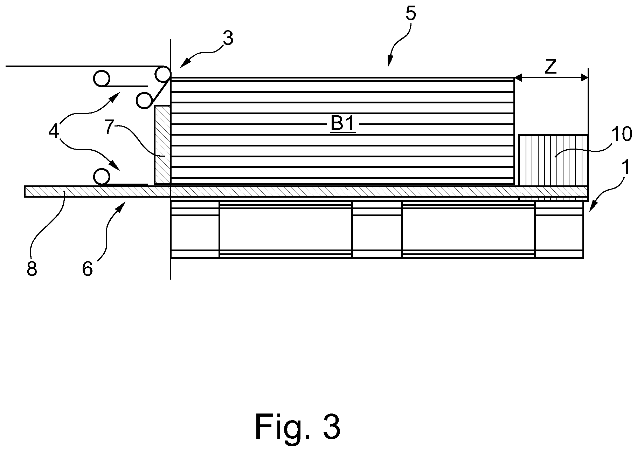

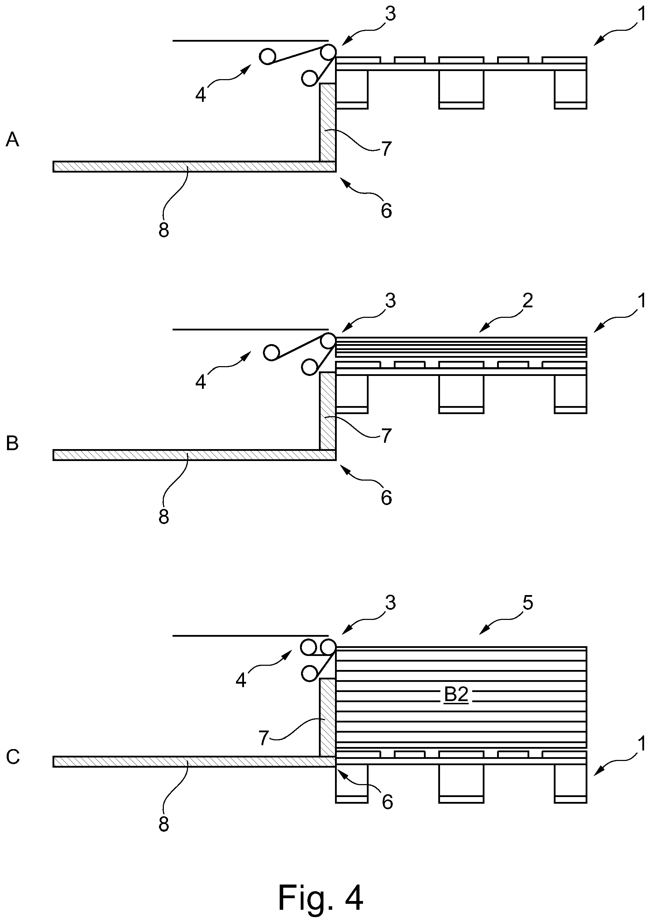

Die Fig. 3 zeigt einen zusätzlichen Anschlag 10, welcher benötigt wird, um die Zentrierfunktion für die Größe B1 zu realisieren. Voraussetzung, um den Anschlag 10 der Stapelwechselvorrichtung 6 zu realisieren ist mindestens eine Länge von 1200 mm erforderlich. Mit Z ist Maß des Anschlags 10 gekennzeichnet, es reicht vom Rand der Palette 1 bis zum Beginn des Stapels 5. Weiterhin sind in der Fig. 3 zwei Trennvorrichtungen 4 dargestellt, ebenso bereits in der Figur 2A. Die Fig. 4A bis 4E zeigen den Palettenaustausch bei Bögen 2 im DIN B2-Format.

Fig. 4A: Die leere Palette 1 wird bewegt bis sie am Anschlag der Trennvorrichtung 4 ausgerichtet ist. Die Trennvorrichtung 4 befindet sich in der normalen Ausgangsposition.

Fig. 4B: Zu Produktionsbeginn werden die Bögen 2 an den Stapel geliefert. Die Bögen 2 bilden einen Stapel 5 auf der Palette 1.

Fig. 4C: Wenn die maximale Stapelhöhe erreicht ist, wird die Trennvorrichtung 4 eingeführt.

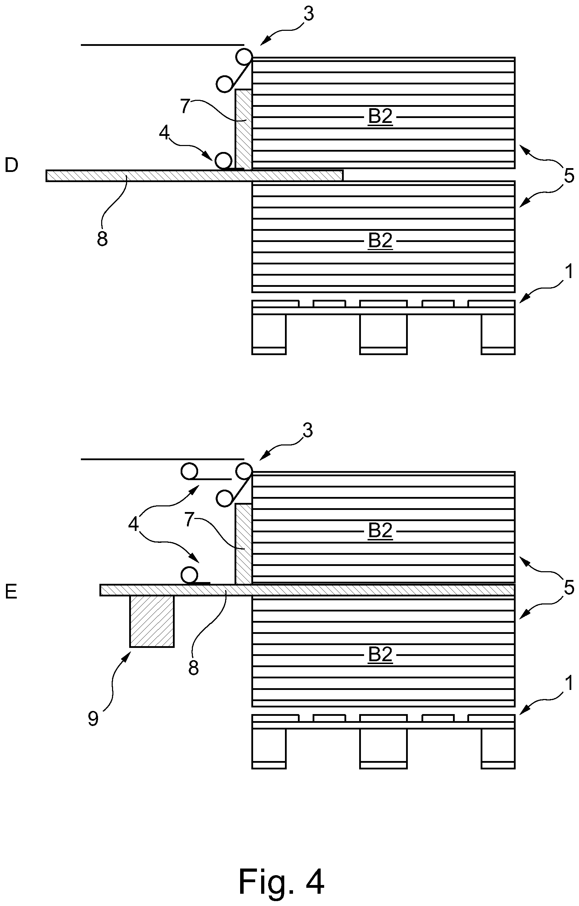

Fig. 4D: Die Stapelwechselvorrichtung 6 wird in den Spalt bewegt und trennt die Stapel 5 voneinander.

Fig. 4E: Die Stapelwechselvorrichtung bewegt sich nur bis zu B2 Position. Die Palettenspannvorrichtung 9 wird nicht in den Prozess eingreifen und den Stapel 5 und/oder die B2 orientierte Palette 1 stören.

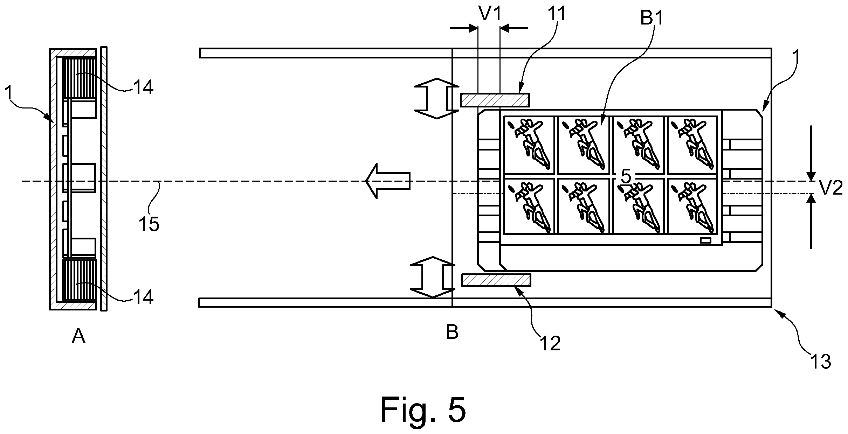

Die Fig. 5A und 5B zeigen Voraussetzungen um die Funktion später zu implementieren.
Folgende Voraussetzungen sind zu erfüllen, um die Palettenzentriervorrichtung in den Rahmen der Stapelwechselvorrichtung 6 zu implementieren. Es ist eine manuelle Einstellvorrichtung 11 der Bogenposition vorzusehen. Eine Palettenspannvorrichtung 9 ist an der Stapelwechselvorrichtung 6 für die Zentriereinheit vorgesehen. Die Einstellung der Palettenbreite über die Einstellvorrichtung 12 erfolgt manuell. Ein horizontaler Antrieb ist zur Beförderung der Palette 1 auf der Stapelwechselvorrichtung 6 vorgesehen. Die Palette 1 wird auf dem Stapelaufnahmetisch 13 über die Palettenspannvorrichtung 9 und Stapelwechselvorrichtung 6 in die Mittelstellung des Stapels 5 auf der Längsseite bewegt.

Der Bereich 14 bietet Platz und Freiraum zur Installation der Palettenspannvorrichtung 9.

Die Palette 1 ist auf dem Stapelaufnahmetisch 13 an der Mittellinie 15 des Querschneiders ausgerichtet.

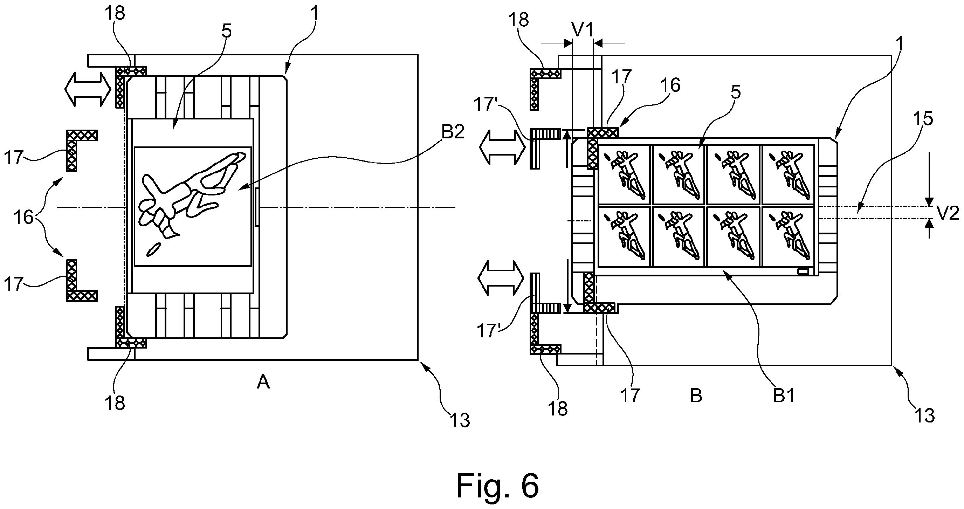

Die Fig. 6A und 6B zeigen Voraussetzungen um die Funktion später zu implementieren.

Folgende Voraussetzungen sind zu erfüllen, um die Palettenzentriervorrichtung in den Rahmen der Stapelwechselvorrichtung 6 nachträglich zu implementieren. Mit V1 ist der Versatz (Offset) bzw. Abstand an der Längsseite der Palette 1 zwischen dem Stapel 5 und dem Rand der Palette 1 gekennzeichnet.
Die Einstellung der Bogenposition und der Palettenbreite erfolgt manuell.
Für das Format B1 ist eine Ausrichtung des Palettenversatzes V2 auf die Position des Mittelschneiders möglich.

Ein fester Anschlag für die Bogenzuführung.

Ein im Boden versenkbares Ausrichtungssystem 16, bestehend aus mindestens zwei Anschlägen 17, für die zugeführten Bögen 2. Mit 17' sind die Anschläge 17 in der im Boden versenkten Position gekennzeichnet. Für das Format B2 ist an der Ausrichtungsvorrichtung 16 keine Einstellung erforderlich. Zur Palettierung von Bögen 2 im Format B2 sind Anschläge 18 vorgesehen. Die Anschläge 18 sind fixiert ausgeführt.

Mit der Palettenzentriervorrichtung können alle leeren Paletten auf dem Stapelaufnahmetisch 13 platziert werden. Bei der Palette 1 für die Produktion des Formats B1 wird der Stapel 5 mit der Mittelfunktion zentriert. Die Palette 1 für das Format B2 wird nicht durch die Zentrierfunktion berührt.

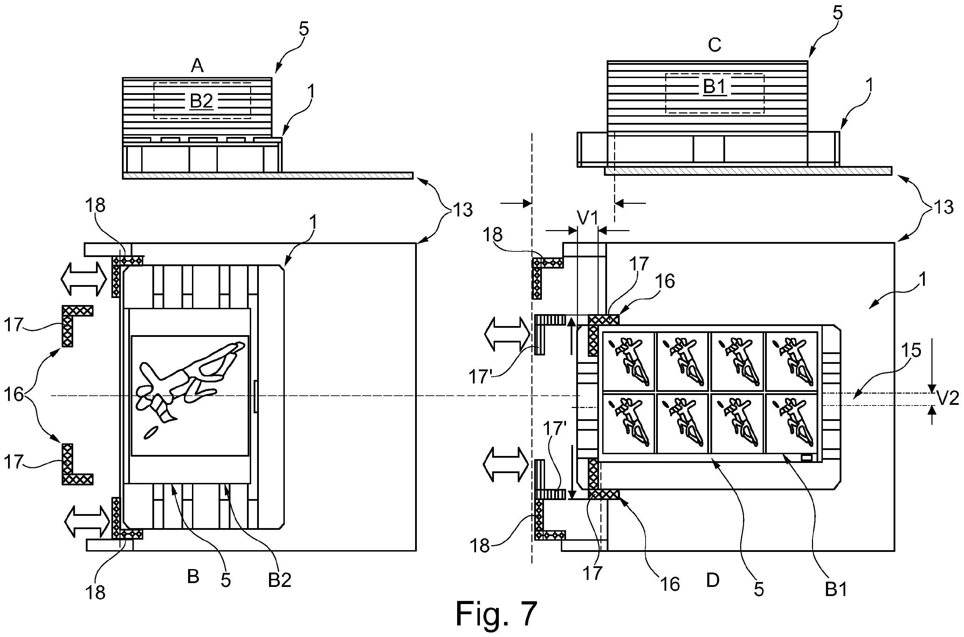

Die Fig. 7A bis 7D zeigen die Variabilität der erfindungsgemäßen Vorrichtung bei der Produktion von Bögen im B1 Format (Fig. 7C und 7D) sowie bei der Produktion von Bögen im B2 Format (Fig. 7A und 7B).

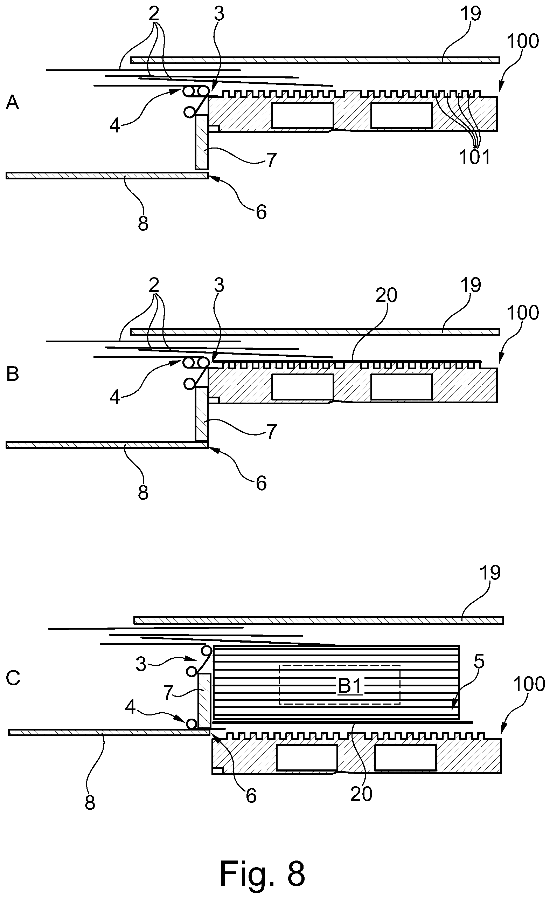

Die Fig. 8A bis 8C zeigen Risiken zum ersten Bogen 2 bzw. ersten Stapel 5 beim Einsatz von Systempaletten 100 bei der Produktion im B1 Format. Oberhalb der Fördervorrichtung 3 ist eine Begrenzung 19 angeordnet, um die Bögen 2 sicher der Systempalette 100 zuzuführen. Die Begrenzung 19 kann auch in der Lage sein, den Bogen zu "tragen", beispielsweise mittels einer Saugeinrichtung.

Die Fig. 8A zeigt den Produktionsbeginn mit der ersten Systempalette 100 bei der Produktion im B1 Format. Der Fluss der Bögen 2 kann durch Spalten 101 in der Systempalette 100 gestoppt werden. Gelöst wird dies durch ein Deckblatt 20 auf der Palette.

Die Fig. 8B zeigt den Produktionsbeginn mit der ersten Systempalette 100 bei der Produktion im B1 Format. Ein Deckblatt wurde auf der Oberseite der Systempalette 100 platziert. Die Trennvorrichtung bewegt sich zwischen Oberschicht und Systempalette 100. Die Deckblattgröße kann standardisiert werden. Das Deckblatt 20 wird nur für Systempaletten 100 benötigt.

Die Fig. 8C zeigt den Beginn des Palettenzentrierprozesses. Das Deckblatt 20 kann während des automatischen Stapelprozesses auf der Stanzmaschine entnommen werden.

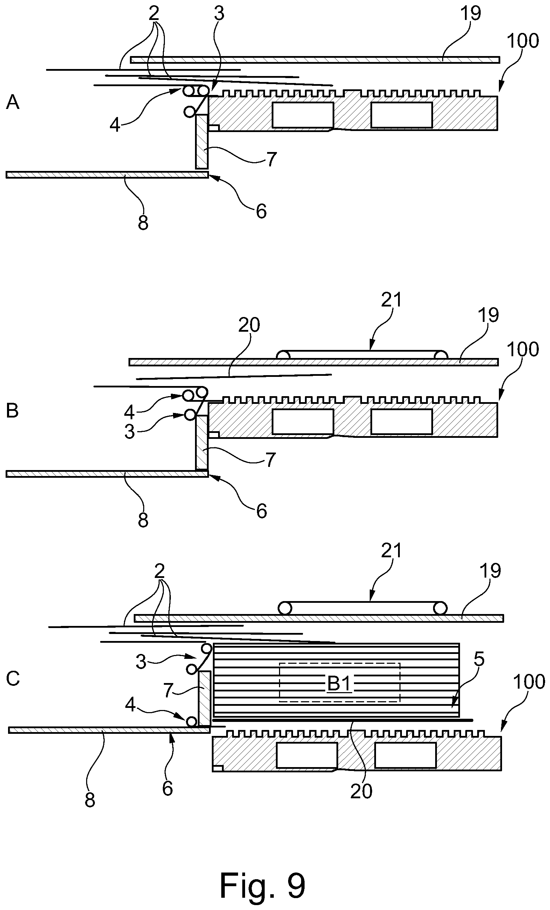

Die Fig. 9A bis 9C zeigen eine alternative Lösung für ein Deckblatt 20 auf der Systempalette 100.

Die Fig. 9A zeigt den Produktionsbeginn mit der ersten Systempalette für Bögen 2 im Format B1. Der Transport der Bögen auf der Systempalette 100 kann durch Lücken in der Systempalette 100 gestoppt werden.

Die Fig. 9B zeigt eine alternative Lösung mit Deckblatt 20 auf der Systempalette 100. Das Deckblatt wird vom Querschneider im Hochlauf des Systems hergestellt. Ein weißes Deckblatt 20 wird für den Stapel 5 erzeugt und durch ein zusätzliches Saugband 21 gehalten und nur für diesen Zweck geliefert.

Die Fig. 9C zeigt den Beginn des Palettenzentriervorganges zum Start der Produktion von Bögen 2 im B1 Format. Das Deckblatt 20 kann während des automatischen Stapelprozesses auf der Stanzmaschine entnommen werden.

**Bezugszeichenliste:**

| | |
|---|---|
| 1 | Palette |
| 2 | Bogen |
| 3 | Fördervorrichtung |
| 4 | Trennvorrichtung |
| 5 | Stapel |
| 6 | Stapelwechselvorrichtung |
| 7 | Anschlag |
| 8 | Schieber |
| 9 | Palettenspannvorrichtung |
| 10 | Anschlag |
| 11 | Einstellvorrichtung (Blattposition) |
| 12 | Einstellvorrichtung (Palettenbreite) |
| 13 | Stapelaufnahmetisch |
| 14 | Bereich |
| 15 | Mittellinie |
| 16 | Ausrichtungsvorrichtung |
| 17 | Anschlag |
| 17' | Anschlag versenkt |
| 18 | Anschlag |
| 19 | Begrenzung |
| 20 | Deckblatt |

21      Saugband
100     Systempalette
101     Spalten

B1      Bogen im Format DIN B1
B2      Bogen im Format DIN B2
H       Minimale Höhe beim Stapelwechsel
X       Minimaler Freiraum unter der Stapelwechselvorrichtung
Y       Maximaler Freiraum unter der Stapelwechselvorrichtung
Z       Maß des Anschlags 10
V1      Versatz zwischen Stapel und langer Palettenkante
V2      Versatz an der kurzen Palettenkante

**Patentansprüche**

1.  Verfahren zur Herstellung von Stapeln (5) aus Bögen (2), wobei zur Überbrückung eines vertikalen Abstands zwischen einer Zuförderebene der Bögen (2) und einer Flurebene eine Ablageplattform als ein vertikal auf- und abfahrbarer Stapelaufnahmetisch (13) ausgeführt ist, wobei auf dem Stapelaufnahmetisch (13) eine Palette (1, 100) platziert wird, auf welcher die Bögen (2) zu Stapeln (5) abgelegt werden, wobei der Aufnahmetisch (13) mit Hilfe einer Hubeinrichtung in eine obere Endposition gefahren wird und die Bögen (2) der Palette (1, 100) kontinuierlich zugeführt werden, wobei während der kontinuierlichen Zuführung der Stapelaufnahmetisch (13) mit der Palette (1, 100) kontinuierlich abgesenkt wird, um eine gleichmäßige Stapelbildung zu gewährleisten, wobei dann, wenn die gewünschte Stapelhöhe erreicht ist, die Stapelwechselvorrichtung (6) zwischen zwei Bögen (2) fährt und diese vollständig voneinander trennt, wobei der nachfolgende Stapel (5) auf der Oberseite eines Schiebers (8) gebildet wird, wobei der Schieber (8) kontinuierlich abgesenkt wird, während der Aufnahmetisch (13) in seine untere Endposition auf Höhe des Flurbereichs fährt und die Palette (1, 100) mit dem gebildeten Stapel (5) wegtransportiert wird, wobei anschließend der Stapelaufnahmetisch (13) mit einer neuen, leeren Palette (1, 100) auf die Höhe der Stapelwechselvorrichtung (6) bewegt wird und der Schieber (8) der Stapelwechselvorrichtung (6) horizontal wieder in seine Ausgangsposition zurück fährt und dadurch den sich bildenden Stapel (5) auf die leere Palette (1, 100) ablädt, wobei danach die Palette (1, 100) bzw. der Stapelaufnahmetisch (13) erneut kontinuierlich abgesenkt wird, bis die gewünschte Stapelhöhe erreicht ist und der Schieber (8) der Stapelwechselvorrichtung (6) wieder zwischen zwei Bögen (2) fährt, um die Stapel (5) zu separieren, wobei eine Palettenzentriervorrichtung mindestens zu Beginn der Übergabe des Stapels (5) auf die Palette (1, 100) eingesetzt wird, **dadurch gekennzeichnet, dass** die Palettenzentriervorrichtung in den Rahmen der Stapelwechselvorrichtung (6) integriert ist.

2.  Verfahren nach Patentanspruch 1, **dadurch gekennzeichnet, dass** die Palettenzentriervorrichtung ein Ausrichtungssystem (16) umfasst.

3.  Verfahren nach Patentanspruch 2, **dadurch gekennzeichnet, dass** das Ausrichtungssystem (16) mindestens einen Anschlag (17, 17') aufweist, wobei, vorzugsweise, der mindestens eine Anschlag (17, 17') in der Fläche zur Aufnahme der Palette (1) versenkbar ist und/oder wobei der mindestens eine Anschlag (17, 17') nur an der schmalen Seite der Palette (1, 100), abhängig vom erzeugten Bogenformat, zur Anlage kommt.

4.  Verfahren nach Patentanspruch 1, **dadurch gekennzeichnet, dass** die Palettenzentriereinrichtung eine Palettenspannvorrichtung (9) zur Positionierung der Palette (1, 100) unter dem jeweiligen Stapel (5) aufweist.

5.  Verfahren nach einem der vorhergehenden Ansprüche, **dadurch gekennzeichnet, dass** wenigstens ein Deckblatt (20) einmalig vor oder zu Beginn der kontinuierlichen Stapelbildung eingesetzt wird.

6.  Verfahren nach Anspruch 5 **dadurch gekennzeichnet, dass** das Deckblatt (20) während eines nachfolgenden Verarbeitungsprozesses des Stapels (5) entnommen wird.

7.  Verfahren nach Anspruch 5 oder 6, **dadurch gekennzeichnet, dass** ein Saugband (21) zur Zuführung des Deckblatts (20) zur Palette (1, 100) dient.

8.  Verfahren nach einem der Ansprüche 5 bis 7, **dadurch gekennzeichnet, dass** das Deckblatt (20) vom Querschneider hergestellt wird.

9. Verfahren, nach einem der vorhergehenden Ansprüche, **dadurch gekennzeichnet, dass** der Stapelaufnahmetisch (13) mehrteilig ausgebildet ist, wobei die Größe des Stapelaufnahmetisches (13) insbesondere durch Klappen und/oder Schieben von Teilen des Stapelaufnahmetisches (13) relativ zueinander verändert wird, oder dass der Stapelaufnahmetisch (13) für eine Stapelbildung in horizontaler Richtung verschoben wird.

10. Verfahren nach Anspruch 9, **dadurch gekennzeichnet, dass** der Stapelaufnahmetisch (13) wenigstens zu Beginn der Stapelbildung am Rand eines feststehenden Anschlags ausgerichtet wird.

11. Verfahren nach einem der vorhergehenden Ansprüche, **dadurch gekennzeichnet, dass** der Stapelaufnahmetisch (13) mehrteilig ausgebildet ist, wobei die Größe des Stapelaufnahmetisches (13) insbesondere durch Klappen und/oder Schieben von Teilen des Stapelaufnahmetisches (13) relativ zueinander verändert wird und/oder dass Teile des Stapelaufnahmetisches (13) in vertikaler Richtung unabhängig voneinander verfahren werden.

## Claims

1. A method for the production of stacks (5) of sheets (2), wherein to bridge a vertical distance between a feed plane of the sheets (2) and a floor plane a storage platform is designed as a vertically extendable and retractable stack receiving table (13), wherein on the stack receiving table (13) a palette (1, 100) is positioned, on which the sheets (2) are placed into stacks (5), wherein the receiving table (13) is moved into an upper end position with the help of a lifting device and the sheets (2) are fed continually to the palette (1, 100), wherein during the continual feeding the stack receiving table (13) together with the palette (1, 100) is lowered continually in order to guarantee a consistent stack formation, wherein when the desired stack height is achieved, the stack changing device (6) travels between two sheets (2) and separates these completely from each other, wherein the subsequent stack (5) is formed on the upper side of a slide valve (8), wherein the slide valve (8) is lowered continually, while the receiving table (13) moves into its lower end position at the level of the floor area and the palette (1, 100) together with the formed stack (5) is transported away, wherein then the stack receiving table (13) together with a new, empty palette (1, 100) is moved to the height of the stack changing device (6) and the slide valve (8) of the stack changing device (6) is returned horizontally back to its starting position and thereby unloads the forming stack (5) onto the empty palette (1, 100), wherein then the palette (1, 100) or the stack receiving table (13) is again lowered continually, until the desired stack height is achieved and the slide valve (8) of the stack changing device (6) moves again between two sheets (2) in order to separate the stacks (5), wherein a palette centring device is used at least at the start of the transfer of the stack (5) to the palette (1, 100), **characterised in that** the palette centring device is integrated into the structure of the stack changing device (6).

2. The method according to claim 1, **characterised in that** the palette centring device comprises an alignment system (16).

3. The method according to claim 2, **characterised in that** the alignment system (16) has at least one limit stop (17, 17'), wherein, preferably, the at least one limit stop (17, 17') can be retracted into the surface for receiving the palette (1) and/or wherein the at least one limit stop (17, 17') only makes contact on the narrow side of the palette (1, 100), depending on the produced sheet format.

4. The method according to claim 1, **characterised in that** the palette centring device comprises a palette clamping device (9) for positioning the palette (1, 100) below the respective stack (5).

5. The method according to one of the previous claims, **characterised in that** at least one cover sheet (20) is used once before or at the beginning of the continual stack formation.

6. The method according to claim 5, **characterised in that** the cover sheet (20) is removed during a subsequent handling process of the stack (5).

7. The method according to claim 5 or 6, **characterised in that** a suction belt (21) serves to feed the cover sheet (20) to the palette (1, 100).

8. The method according to one of claims 5 to 7, **characterised in that** the cover sheet (20) is produced by the cross cutter.

9. The method according to one of the previous claims, **characterised in that** the stack receiving table (13) is formed from multiple parts, wherein the size of the stack receiving table (13) is changed particularly by folding and/or pushing parts of the stack receiving table (13) relative to one another, or **in that** the stack receiving table (13) is pushed in the horizontal direction for a stack formation.

10. The method according to claim 9, **characterised in that** the stack receiving table (13) is aligned at least at the start of the stack formation on the edge of a fixed limit stop.

11. The method according to one of the previous claims, **characterised in that** the stack receiving table (13) is formed from multiple parts, wherein the size of the stack receiving table (13) is changed particularly by folding and/or pushing parts of the stack receiving table (13) relative to one another, and/or **in that** parts of the stack receiving table (13) are independently moved in the vertical direction.

**Revendications**

1. Procédé de fabrication d'empilements (5) de feuilles (2), pour combler une distance verticale entre un plan d'acheminement des feuilles (2) et un plan de passage, une plate-forme de dépôt étant conçue comme une table de réception d'empilement (13) pouvant monter et descendre à la verticale, sur la table de réception d'empilement (13), on place une palette (1, 100) sur laquelle les feuilles (2) sont déposées en empilements (5), la table de réception d'empilement (13) étant déplacée au moyen d'un dispositif de levage dans une position finale supérieure et les feuilles (2) de la palette (1, 100) étant acheminées en continu, pendant l'acheminement continu, la table de réception d'empilement (13), ensemble avec la palette (1, 100), étant abaissée en continu pour assurer un empilement uniforme, ensuite lorsque la hauteur d'empilement souhaitée est atteinte, le dispositif de changement d'empilement (6) se déplace entre deux feuilles (2) et les sépare complètement l'une de l'autre, l'empilement suivant (5) étant formé sur la face supérieure d'un coulisseau (8), le coulisseau (8) étant abaissé en continu, tandis que la table de réception (13) se déplace dans sa position finale inférieure à la hauteur de la zone de passage et que le transport de la palette (1, 100) avec l'empilement formé (5) se poursuit, ensuite la table de réception d'empilement (13) avec une nouvelle palette vide (1, 100) étant déplacée à la hauteur du dispositif de changement d'empilement (6) et le coulisseau (8) du dispositif de changement d'empilement (6) revenant horizontalement dans sa position initiale et ainsi l'empilement se formant ainsi (5) sur la palette vide (1, 100) étant déchargé, après quoi la palette (1, 100) ou la table de réception d'empilement (13) étant de nouveau abaissée en continu jusqu'à ce que la hauteur d'empilement souhaitée soit atteinte et que le coulisseau (8) du dispositif de changement d'empilement (6) se déplace à nouveau entre deux feuilles (2) pour séparer l'empilement (5), un centreur de palette étant utilisé au moins au début du transfert de l'empilement (5) sur la palette (1, 100) **caractérisé en ce que** le centreur de palette est intégré au cadre du dispositif de changement d'empilement (6).

2. Procédé selon la revendication 1, **caractérisé en ce que** le centreur de palette comprend un système d'alignement (16).

3. Procédé selon la revendication 2, **caractérisé en ce que** le système d'alignement (16) comporte au moins une butée (17, 17'), de préférence, ladite au moins une butée (17, 17') étant escamotable dans la surface de réception de la palette (1) et/ou ladite au moins une butée (17, 17') venant uniquement en contact avec le côté étroit de la palette (1, 100), en fonction du format de feuille produite.

4. Procédé selon la revendication 1, **caractérisé en ce que** le centreur de palette comprend un dispositif de serrage de palette (9) pour positionner la palette (1, 100) sous l'empilement concerné (5).

5. Procédé selon l'une des revendications précédentes, **caractérisé en ce que** 'au moins une feuille de couverture (20) est utilisée une fois avant ou au début de l'empilement en continu.

6. Procédé selon la revendication 5, **caractérisé en ce que** la feuille de couverture (20) est retirée lors d'un traitement ultérieur de l'empilement (5).

7. Procédé selon la revendication 5 ou 6, **caractérisé en ce que** l'on utilise une courroie d'aspiration (21) pour acheminer la feuille de couverture (20) vers la palette (1, 100).

8. Procédé selon l'une des revendications 5 à 7, **caractérisé en ce que** la feuille de couverture (20) est fabriquée par un couteau transversal.

9. Procédé selon l'une des revendications précédentes, **caractérisé en ce que** la table de réception d'empilement (13) est conçue en plusieurs parties, la taille de la table de réception d'empilement (13) étant notamment modifiée lorsque les parties de la table de réception d'empilement (13) sont rabattues ou poussées les unes par rapport aux autres ou **en ce que** la table de réception d'empilement (13) est poussée dans la direction horizontale pour la formation d'empilement.

10. Procédé selon la revendication 9, **caractérisé en ce que** la table de réception d'empilement (13) est alignée au moins au début de l'empilement avec le bord d'une butée fixe.

11. Procédé selon l'une des revendications précédentes, **caractérisé en ce que** la table de réception d'empilement (13) est conçue en plusieurs parties, la taille de la table de réception d'empilement (13) étant modifiée en particulier lorsque les parties de la table de réception d'empilement (13) sont rabattues ou poussées les unes par rapport aux autres et/ou **en ce que** des parties de la table de réception d'empilement (13) sont déplacées indépendamment les unes des autres dans la direction verticale.

Fig. 1

Fig. 1

Fig. 1

Fig. 1

A

B

$H$

C

$100 \text{ mm} = \frac{1}{2}*(1200-1000)$

$x$

D

$y$

$250 \text{ mm} = \frac{1}{2}*(1200-700)$

B1 = 707 mm * 1000 mm
B2 = 500 mm * 707 mm

Fig. 2

Fig. 3

Fig. 4

Fig. 4

Fig. 5

EP 3 241 791 B1

Fig. 6

Fig. 7

Fig. 8

A

B

C

Fig. 9

**IN DER BESCHREIBUNG AUFGEFÜHRTE DOKUMENTE**

**In der Beschreibung aufgeführte Patentdokumente**

- DE 3028865 A1
- DE 102014214237 A1
- EP 1870361 A1